# EUROPEAN PATENT SPECIFICATION

(11) **EP 4 523 511 B1**
(45) Date of publication and mention of the grant of the patent: **21.10.2026**
(21) Application number: 24197118.3
(22) Date of filing: 28.08.2024
(51) Int. Cl.: A01D 34/00, A01D 34/74

(54) **HEIGHT ADJUSTMENT MECHANISM**
HÖHENVERSTELLUNGSMECHANISMUS
MÉCANISME DE RÉGLAGE DE HAUTEUR

(30) Priority: 18.09.2023 US 202318369330
(43) Date of publication of application: 19.03.2025
(73) Proprietor: Black & Decker, Inc., New Britain, CT 06053 (US)
(72) Inventor: ROIS, Steven, New Britian, CT 06053 (US)
(74) Representative: SBD IPAdmin

(56) References cited:
- EP-A1- 3 837 950
- EP-A1- 4 062 738
- EP-B1- 2 412 220
- US-A1- 2020 170 186
- US-A1- 2023 240 180
- US-B2- 11 140 820

## Description

### BACKGROUND OF THE INVENTION

The present invention relates to height adjustment mechanisms for mowers and has particular, although not exclusive, relevance to such mechanisms as are employed in robotic mowers. During use of a mower, it is usual for a user of the mower whether it is autonomous (such as a robotic mower), or manually operated (such a push- or ride-on mower), to want to adjust the height of the cut. This is so that the length of the vegetation (such as grass) after the cut has been performed is both predetermined and uniform.

Height adjustment mechanisms for mowers are known. For example, EP4062738 discloses one such mechanism. US2023/240180A1 discloses a robotic garden tool having a deck, a blade, a motor, and a blade height adjustment mechanism. The blade is movably coupled to the deck. The motor is configured to move the blade about an axis of rotation, and the axis of rotation defines an axial direction. The blade height adjustment mechanism includes a manual actuator configured to move in response to manual actuation by an operator. The manual actuator is operably coupled to a cam interface. The cam interface is disposed within a cylindrical volume defined circumferentially by the cam interface and bounded axially by upper and lower distal ends of the cam interface. The axis of rotation of the blade intersects the cylindrical volume. The blade is configured to move at least partially in the axial direction in response to movement of the manual actuator.

A problem associated with such height adjustment mechanisms is their vulnerability to damage, given the rough environment in which the mower is operated. A further problem is the frequency of which the blade cutting height of the mower is altered can mean the height adjustment mechanism may be subject to accelerated wear, which can render the mechanism faulty or even broken.

There exists, therefore a desire to employ a height adjustment mechanism which is robust and less likely to suffer damage or failure than the prior art mechanisms.

### SUMMARY OF THE INVENTION

According to the present invention, therefore, there is provided a mower having a height adjustment mechanism as defined in claim 1.

The height adjustment mechanism has the advantage that use of a cam mechanism comprising two semi-circular surfaces shares the load which the mechanism carries when the height of the cutting deck is being adjusted. This means less stress on the component parts of the cam follower, as it, too is split into two parts each having its own complimentary engagement surface. As the component parts of the mechanism suffer less stress, the mechanism is more robust than the prior art.

The cam follower is hingedly coupled to a first lift arm, which first lift arm is also hingedly coupled to the cutting deck. And the first lift arm is further be hingedly coupled to the chassis. Also the first lift arm is further hingedly coupled to the chassis. This structure permits of easy movement of the cutting deck when the cut height is to be altered.

Advantageously the cam mechanism, the first lift arm, the second lift arm and the cutting deck together form a 4-bar linkage able to move the cutting deck relative to the chassis such that the movement is a translation, ensuring the attitude of the cutting deck to the surface does not change with the height of the deck relative to the surface. Use of such an arrangement ensures the movement of the cutting deck is parallel to the surface to be cut and avoids any pivoting of the deck as it moves. This, in turn, ensures the plane of rotation of the cutting blades housed within the cutting deck, does not pivot relative to the surface to be cut.

In a preferred embodiment the cam mechanism is formed integrally with the rotatable knob. This permits of ease of manufacture and assists in controlling production costs.

Each of the two semi-circular stepped surfaces of the cam mechanism may comprise a plurality of individual steps of differing axial extent. And each of the individual steps may possess an area formed thereon which forms a stable platform against which the respective cam follower complimentary engagement surfaces may rest. In this manner, known height indexing adjustments may be made by a user of the mower.

Preferably a return spring is coupled between the cutting deck and the first lift arm, which spring urges the deck into its highest position away from the surface to be cut.

### BRIEF DESCRIPTION OF THE DRAWINGS

In a preferred embodiment the mower is a robotic mower.

An embodiment of the present invention will now be described, by way of example only and with reference to the accompanying drawings, of which:
Figure 1 shows a schematic perspective view of a mower in accordance with the present invention;
Figure 2 shows a schematic view, from the other side to that of Fig 1, but with the mower body removed;
Figure 3 shows another schematic perspective view, but with the body shown in ghost outline and also removed;
Figure 4 shows a schematic perspective view, from below, of the mower without the body in place;
Figure 5 shows perspective and side views of the cam, cam follower and lift arms;
Figure 6 shows side views of the height adjustment mechanism in two different height positions;
Figure 7 shows a perspective view of the internal structure of the cam mechanism;
Figure 8 shows views of the progression of movement as between the cam and cam follower as the deck height is adjusted;
Figure 9 shows a series of side views of the deck height being adjusted, and:
Figure 10 illustrates an example of various height settings shown on the adjustment knob.

### DETAILED DESCRIPTION OF THE INVENTION

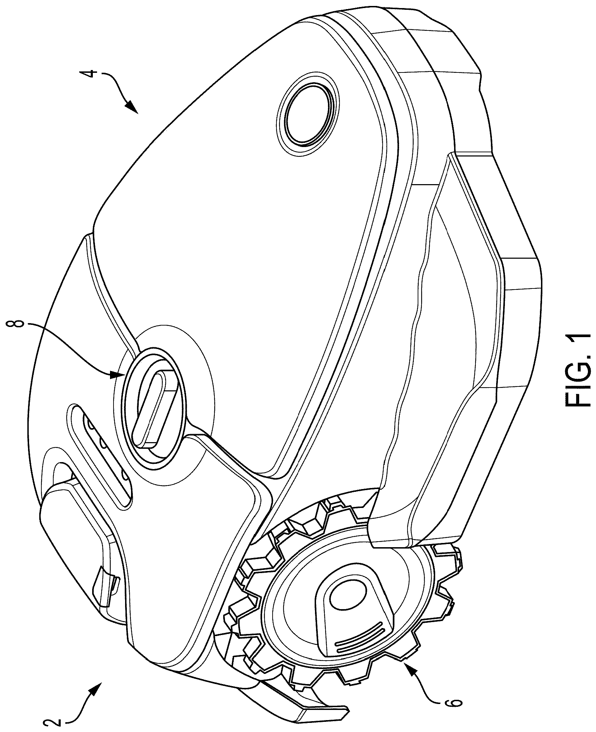

Referring initially to Fig 1, it can be seen that a mower 2, in this case robotic mower (a term generally understood by those skilled in the art to encompass autonomous mowers which are able to cut an area of vegetation without direct user control) having a body 4 and being driven by a pair of rear-mounted wheels 6. The wheels 6 are driven by a motor, in this example an electric motor 8 powered by a rechargeable battery (not shown, but well-known to those skilled in the art). The mower 2 has single front wheel 10, which functions as a castor, being freely rotatable about an axis A-A. The direction of the mower when the wheels 6 are being driven by the motor 8 is controlled by differential speed as between each of the two driving wheels 6, in conventional manner. The front wheel 10 is not a driving wheel and is not powered, in this example, although could be, if required.

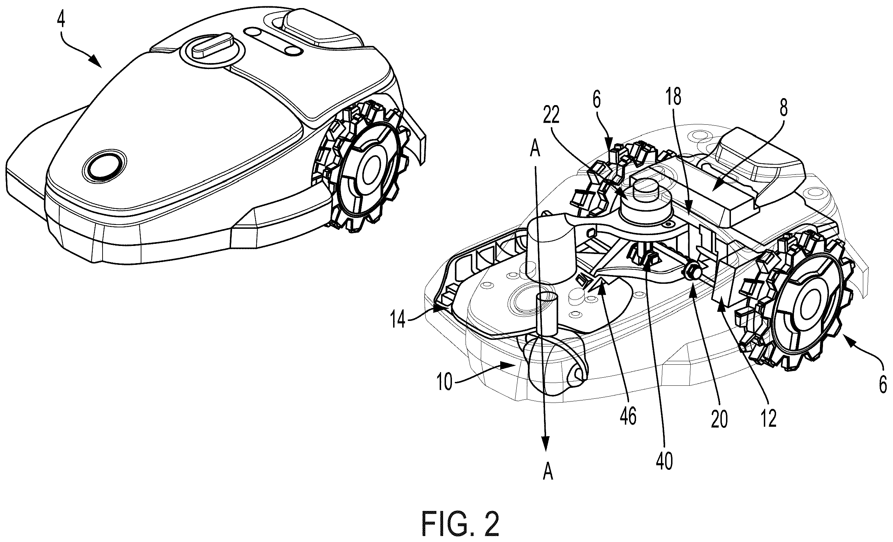

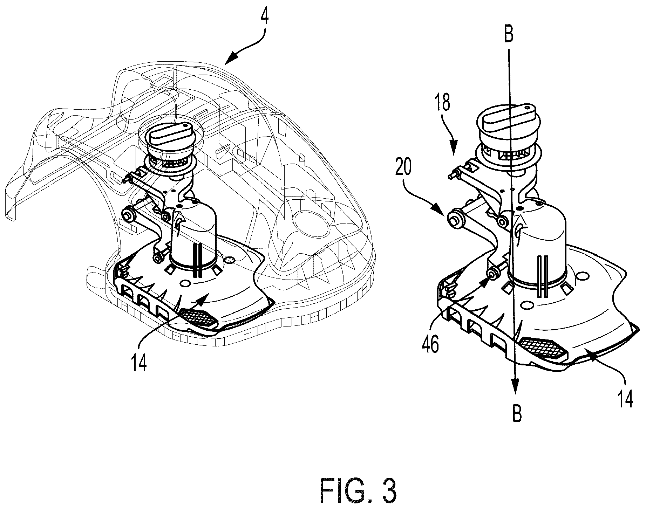

The mower 2 includes a wheel-mounted chassis 12. The chassis provides a framework upon which the functioning components of the mower sit on the wheels 6, 10 and support the body 4. Reference also to Figs 2-4 illustrate this. The motor 8 sits on the chassis 12, as can be seen most clearly form Fig 2.

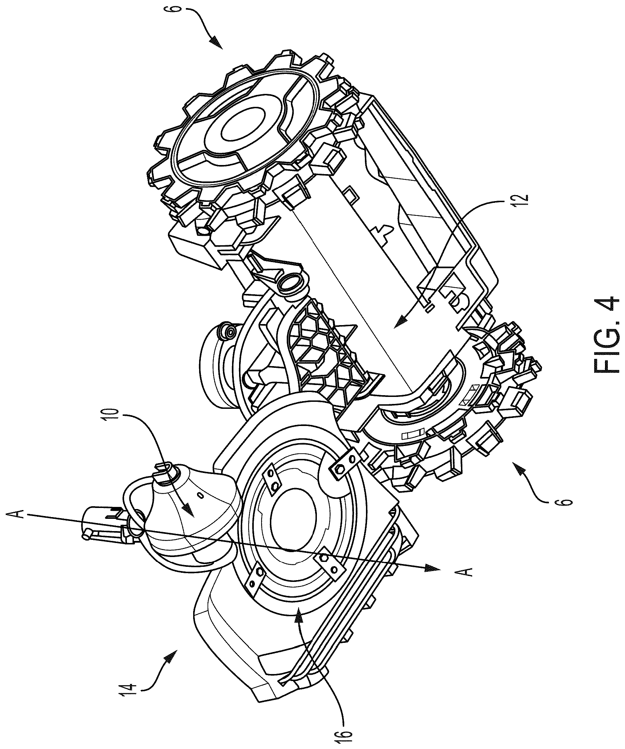

The chassis 12 also provides a support structure for a cutting deck 14. The cutting deck 14 (as can be seen best from Fig 4) includes a rotatable disc having a set of blades formed thereon 16. The disc and blades 16 can be driven by motor 8, or by a separate motor (not shown in this example). This would enable to cutting disc (the means by which the vegetation growing on the surface along which the mower moves may be cut) to be powered independently of the mower movement. However, in the illustrated example, the single motor 8 powers both the wheels 6 and cutting disc 16. In this example, the drive is directly supplied to both the wheels 6 and disc 16, but could, for example, be via gearboxes in order to regulate speed, or torque as appropriate for the terrain on which the mower moves and the vegetation to be cut.

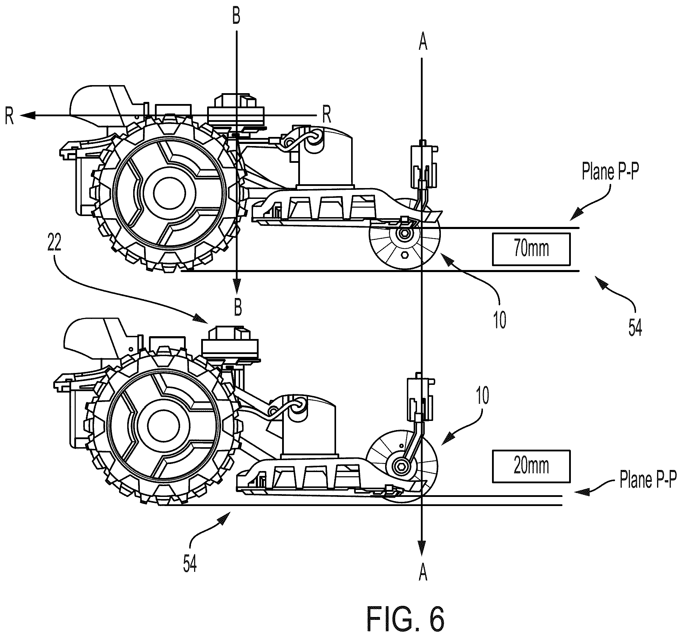

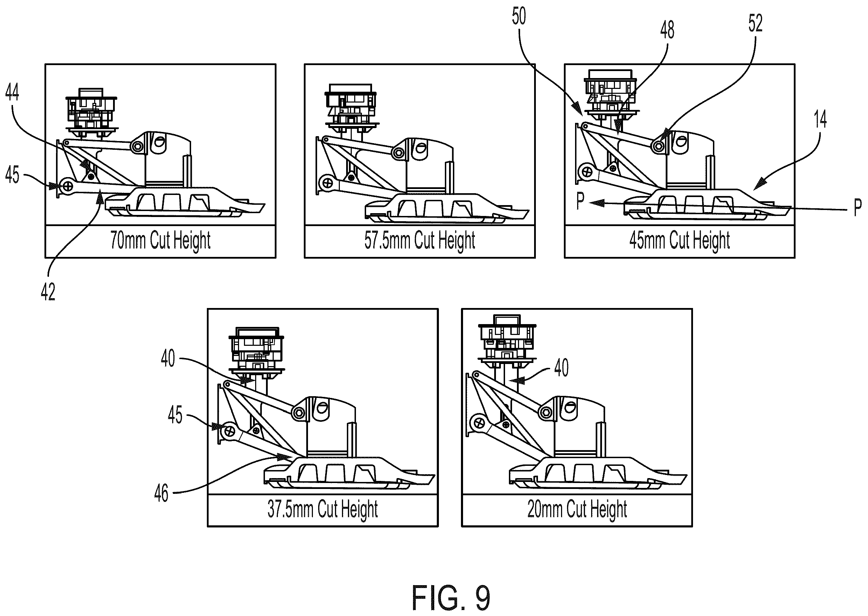

The cutting deck 14 is coupled to the chassis 12 at two places: an upper connection 18 and a lower connection 20 (see Figs 2, 3 and 5). The distance (or separation) between the cutting deck 14 and the wheels 6, 10 may be manually adjusted by a user of the mower in order to govern the amount of vegetation cut by the disc 16. A height adjustment mechanism (to be described, below) achieves this. The alteration of the height of the deck above the wheels 6, 10 (and, hence above the surface upon which the mower sits and moves) is controlled in such a way as to ensure only an up-down translation of the deck 14. The deck maintains its alignment with the plane, P-P (as illustrated in Figs 6 and 9) of the cutting disc and does not pivot relative thereto. This ensures a uniform cut of the vegetation as the disc and blades 16 rotate.

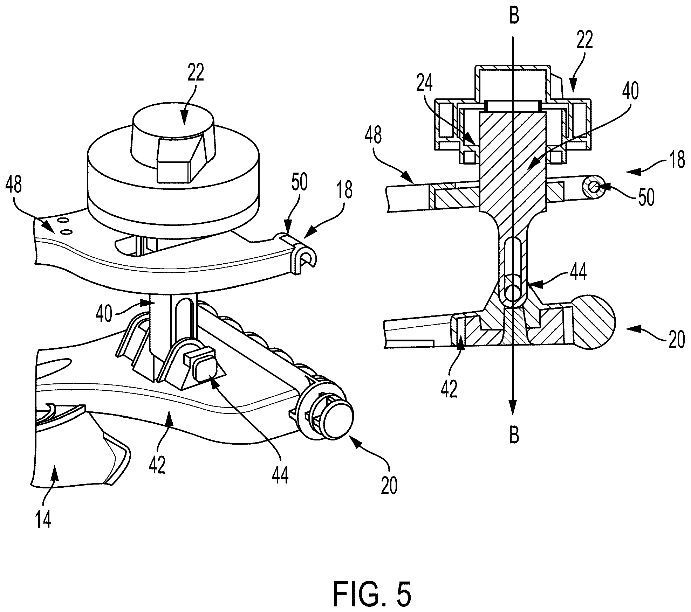

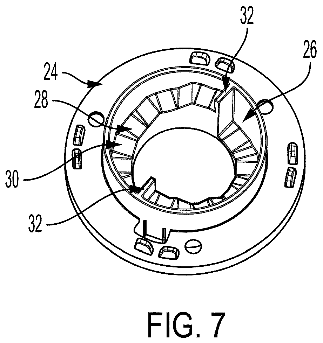

Referring now also to Figs 5-9, the height adjustment mechanism will be explained. A manually rotatable knob 22 projects outside the body 4 so that it may be readily held by the hand of a user of the mower 2. Depending upon the sense of rotation of the knob 22, the user may cause the height of the deck 14 relative to the wheels 6, 10 (or, indeed the height of the deck above the surface upon which the mower rests or travels) to increase or decrease.

Either formed integrally with the knob 22, or coupled thereto (in either instance, such that it may rotate with rotation of the knob 22) is a cam mechanism 24. The cam mechanism 24 rotates within a plane of rotation R-R (Fig 6) upon rotation of knob 22, but is axially immovable, being held to the mower body 4.

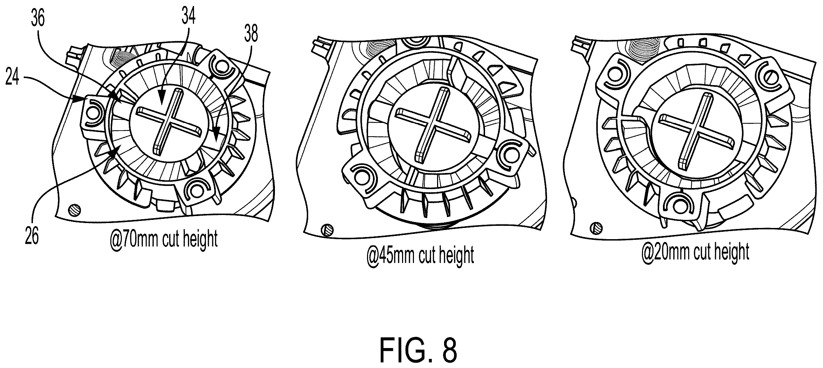

Formed on the inside of the cam mechanism facing away from the knob 24 is a series of arcuately formed steps 26 (Fig 8). The steps also extend along an axis B-B, which is orthogonal to the plane R-R. In this manner, the steps 26 form part of a spiral "staircase" such that a series of lands 28 (having no axial extent) are interspersed with a series of ramps (having both axial and circumferential extent) 30. The purpose of the lands 28 and ramps 30 will become apparent form the description, below.

It can be seen that the steps 26 are formed in two arcuate semi-circles, each of which meets its neighbour at a boundary wall 32. This dual semi-circular construction of the cam mechanism is an important component of the invention. The two arcuate semi-circles are, in this example, diametrically-opposed.

Cooperating with the cam mechanism 24 is cam follower 34. Cam follower 34 (see Fig 8) is formed with two opposing follower members 36, 38, each of which cooperates with a respective one of the arcuate steps 26 either side of the boundary wall 32. As with the two arcuate semi-circles, the two opposing follower members 36, 38 are, in this example, formed diametrically opposite to one another.

Because the steps 26 are formed in two diametrically-opposed arcuate semi-circles, as the cam mechanism 24 rotates on rotation of the knob 22, then the cam follower arms 36, 38 will ride axially (along axis B-B) up or down the steps in unison. Each cam follower arm 36 and 38 will ride up or down its respective semi-circular range of steps, of course. The cam follower 34 has an axially extending body component 40 which is rotationally restrained, but able to move along the axis B-B concomitantly with rotation of the cam mechanism 24, as a result of the cooperation between the steps 26 and arms 36, 38. In this manner, therefore, as knob 22 is rotated, so is cam mechanism 24 rotated and so the cooperation between the steps 26 and arms 36, 38 causes the cam mechanism body 40 to move up or down along axis B-B. The cam mechanism body 40 translates up or down along axis B-B.

Use of two opposing arms 36, 38 (ie at 180° to each other) distributes torque stresses placed upon both the cam mechanism 24 and the cam follower 34 evenly and oppositely, meaning that a smooth movement of the body 40 up or down the axis B-B may be achieved.

The cam follower 34 is hingedly (or otherwise pivotally) coupled to a first lift arm 42 via hinge joint 44 (see Fig 5) at a position between the fist lift arm's proximal and distal ends. This enables a pivoting relationship as between the cam follower body 40 and the first lift arm 42. The proximal end of the first lift 42 arm is hingeldy coupled to the chassis 12 at pivot joint 45. The distal end of the first lift arm 42 is hingedly coupled to the cutting deck 14 and pivot joint 46 (see Fig 9). This corresponds to the lower connection 20, discussed above.

A second lift arm 48 is hingedly coupled at its proximal end to the chassis 12 via hinge joint 50 and coupled to the cutting deck 14 at its distal end via hinge joint 52 (see Fig 9). This corresponds to the upper connection 18, discussed above.

The combined arrangement of the cam follower 34 body 40, the first lift arm 42, the second lift arm 48, the chassis 12 and cutting deck 14 and the manner in which they are all interconnected, as explained above, provides a so-called "4-bar linkage" mechanism (which is understood by those skilled in the art). Such a 4-bar linkage permits the height adjustment of the cutting deck 14 to be achieved as a translation (ie the up- and down- movements of the cutting deck 14) are always parallel to the plane P-P. In this manner, there is no possibility of the angle of the cutting deck 14 relative to the wheels 6, 10, or surface 54 on which the wheels roll, altering as the cutting deck 14 is moved up or down. This ensures a consistent attitude of the cutting deck 14 to both the wheels 6, 1 and surface 54.

The use of the lands 28 in the steps 26 of the cam mechanism 24 provides a series of stable platforms (along the arcuately-extending steps 26) upon which the respective arms 36, 38 may be stably held unless and until the user further rotates knob 22. This means a series of known index positions of the cutting deck 14 may be achieved.

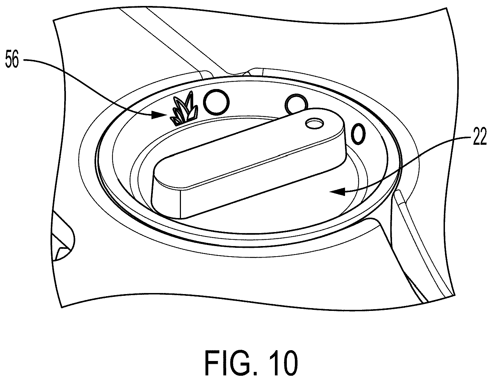

The knob 22 may carry height markings such that the user may rotate the knob in the correct sense and by a known amount in order to achieve the displayed cut height for the cutting deck. An example of such height markings is shown as 56 (Fig 10).

It is advantageous for the cutting deck to be biased toward its highest position relative to the wheels 6, 10 and surface 54. This is due the effect of gravity tending to urge the cutting deck 14 downwards. In this embodiment a return spring 56 (see Fig 9) is employed to provide an upwardly biasing force to the cutting deck 14.

## Claims

1. A mower comprising:
a wheel-mounted chassis (12), at least one motor (8) mounted on the chassis, and a cutting mechanism held within a moveable cutting deck (14), the moveable cutting deck hingedly coupled to the chassis and the at least one motor able to provide drive for the wheels and/or the cutting mechanism, as the mower travels, on its wheels, along a surface; and
a height adjustment mechanism, wherein manual actuation of the height adjustment mechanism allows a user of the mower to alter the height of the moveable cutting deck relative to the surface, the height adjustment mechanism comprising:
i) a manually rotatable knob (22):
ii) a cam mechanism (24), rotatable about a plane of rotation, on rotation of the knob;
iii) a cam follower (34), moveable along an axis (B-B), which axis is orthogonal to the plane of rotation of the cam mechanism;
wherein rotation of the cam mechanism (24) acts on the cam follower (34) to cause the cam follower to move along the axis (B-B) and wherein movement of the cam follower adjusts the position of the moveable cutting deck (14) relative to the wheels;
**characterised in that**:
the cam mechanism (24) comprises two semi-circular stepped surfaces (26) and **in that** the cam follower (34) comprises two complementary engagement surfaces (36, 38), each respective stepped surface of the cam mechanism mating with a corresponding respective engagement surface of the cam follower;
the cam follower (34) is hingedly coupled to a first lift arm (42), which first lift arm is also hingedly coupled to the cutting deck (14) and is further hingedly coupled to the chassis (12);
a second lift arm (48) is hingedly coupled to the cutting deck (14); and
the cam mechanism (24), the cam follower (34), the first lift arm (42), the second lift arm (48) and the cutting deck (14) together form a 4-bar linkage able to move the cutting deck (14) relative to the chassis (12) such that the movement is a translation, ensuring the attitude of the cutting deck (14) to the surface does not change with the height of the deck (14) relative to the surface.

2. The mower according to claim 1 wherein the cam mechanism (24) is formed integrally with the rotatable knob (22).

3. The mower according to any one of the preceding claims wherein each of the two semi-circular stepped surfaces (26) of the cam mechanism (24) comprises a plurality of individual steps (26) of differing axial extent.

4. The mower according to claim 3 wherein each of the individual steps (26) has an area (28) formed thereon which forms a stable platform against which the respective cam follower complementary engagement surfaces (36, 38) may rest.

5. The mower according to any one of the preceding claims wherein a return spring (56) is coupled between the cutting deck (14) and the first lift arm (42), which spring (56) urges the deck (14) into its highest position away from the surface to be cut.

6. The mower according to any one of the preceding claims wherein the mower is a robotic mower.

## Patentansprüche

1. Rasenmäher, umfassend:
ein radmontiertes Fahrgestell (12), mindestens einen am Fahrgestell montierten Motor (8) und einen in einem beweglichen Mähdeck (14) untergebrachten Schneidmechanismus, wobei das bewegliche Mähdeck gelenkig mit dem Fahrgestell verbunden ist und der mindestens eine Motor imstande ist, für die Räder und/oder den Schneidmechanismus einen Antrieb bereitzustellen, während der Rasenmäher auf seinen Rädern über eine Oberfläche fährt; und
einen Höhenverstellmechanismus, wobei eine manuelle Betätigung des Höhenverstellmechanismus es einem Benutzer des Rasenmähers ermöglicht, die Höhe des beweglichen Mähdecks relativ zur Oberfläche zu verändern, wobei der Höhenverstellmechanismus Folgendes umfasst:
i) einen manuell drehbaren Knopf (22);
ii) einen Nockenmechanismus (24), der bei Drehung des Knopfes um eine Drehebene drehbar ist;
iii) einen Nockenstößel (34), der entlang einer Achse (B-B) beweglich ist, wobei die Achse orthogonal zur Drehebene des Nockenmechanismus ist;
wobei eine Drehung des Nockenmechanismus (24) auf den Nockenstößel (34) einwirkt, um zu bewirken, dass der Nockenstößel sich entlang der Achse (B-B) bewegt, und wobei eine Bewegung des Nockenstößels die Position des beweglichen Mähdecks (14) relativ zu den Rädern anpasst;
**dadurch gekennzeichnet, dass**:
der Nockenmechanismus (24) zwei halbkreisförmige Stufenflächen (26) umfasst und dass der Nockenstößel (34) zwei komplementäre Eingriffsflächen (36, 38) umfasst, wobei jede jeweilige Stufenfläche des Nockenmechanismus mit einer entsprechenden jeweiligen Eingriffsfläche des Nockenstößels zusammenpasst;
der Nockenstößel (34) gelenkig mit einem ersten Hubarm (42) verbunden ist, wobei der erste Hubarm ebenfalls gelenkig mit dem Mähdeck (14) verbunden ist und weiter gelenkig mit dem Fahrgestell (12) verbunden ist;
ein zweiter Hubarm (48) gelenkig mit dem Mähdeck (14) verbunden ist; und
der Nockenmechanismus (24), der Nockenstößel (34), der erste Hubarm (42), der zweite Hubarm (48) und das Mähdeck (14) zusammen ein 4-Gelenk-Gestänge bilden, das imstande ist, das Mähdeck (14) relativ zum Fahrgestell (12) so zu bewegen, dass es sich bei der Bewegung um eine Translation handelt, womit sichergestellt wird, dass sich die Lage des Mähdecks (14) zur Oberfläche mit der Höhe des Decks (14) relativ zur Oberfläche nicht ändert.

2. Rasenmäher nach Anspruch 1, wobei der Nockenmechanismus (24) einstückig mit dem drehbaren Knopf (22) ausgebildet ist.

3. Rasenmäher nach einem der vorstehenden Ansprüche, wobei jede der beiden halbkreisförmigen Stufenflächen (26) des Nockenmechanismus (24) eine Vielzahl einzelner Stufen (26) unterschiedlicher axialer Ausdehnung umfasst.

4. Rasenmäher nach Anspruch 3, wobei jede der einzelnen Stufen (26) eine darauf ausgebildete Fläche (28) aufweist, die eine stabile Plattform bildet, auf der die jeweiligen komplementären Eingriffsflächen (36, 38) der Nockenstößel aufliegen können.

5. Rasenmäher nach einem der vorstehenden Ansprüche, wobei zwischen dem Mähdeck (14) und dem ersten Hubarm (42) eine Rückholfeder (56) gekoppelt ist, wobei die Feder (56) das Deck (14) in seine höchste Position von der zu mähenden Oberfläche wegdrückt.

6. Rasenmäher nach einem der vorstehenden Ansprüche, wobei es sich bei dem Rasenmäher um einen Mähroboter handelt.

## Revendications

1. Tondeuse comprenant :
un châssis à roues (12), au moins un moteur (8) monté sur le châssis et un mécanisme de coupe logé dans un plateau de coupe mobile (14), le plateau de coupe mobile étant articulé au châssis et le ou les moteurs étant capables de fournir une force motrice pour entraîner les roues et/ou le mécanisme de coupe, lorsque la tondeuse se déplace, sur ses roues, le long d'une surface ; et
un mécanisme d'ajustement de hauteur, dans laquelle un actionnement manuel du mécanisme d'ajustement de hauteur permet à un utilisateur de la tondeuse de modifier la hauteur du plateau de coupe mobile par rapport à la surface, le mécanisme d'ajustement de hauteur comprenant :
i) un bouton rotatif manuel (22) ;
ii) un mécanisme à came (24), rotatif autour d'un plan de rotation, lors de la rotation du bouton ;
iii) un suiveur de came (34), mobile le long d'un axe (B-B), lequel axe est orthogonal au plan de rotation du mécanisme de came ;
dans laquelle une rotation du mécanisme à came (24) agit sur le suiveur de came (34) pour amener le suiveur de came à se déplacer le long de l'axe (B-B) et dans laquelle un déplacement du suiveur de came ajuste la position du plateau de coupe mobile (14) par rapport aux roues ;
**caractérisée en ce que** :
le mécanisme à came (24) comprend deux surfaces étagées semi-circulaires (26) et **en ce que** le suiveur de came (34) comprend deux surfaces d'engagement complémentaires (36, 38), chaque surface étagée respective du mécanisme à came s'accouplant avec une surface d'engagement respective correspondante du suiveur de came ;
le suiveur de came (34) est articulé à un premier bras de levage (42), lequel premier bras de levage est également articulé au plateau de coupe (14) et est en outre articulé au châssis (12) ;
un second bras de levage (48) est articulé au plateau de coupe (14) ; et
le mécanisme à came (24), le suiveur de came (34), le premier bras de levage (42), le second bras de levage (48) et le plateau de coupe (14) forment ensemble une liaison à 4 barres capable de déplacer le plateau de coupe (14) par rapport au châssis (12) de sorte que le déplacement soit une translation, garantissant que l'attitude du plateau de coupe (14) par rapport à la surface ne change pas avec la hauteur du plateau (14) par rapport à la surface.

2. Tondeuse selon la revendication 1, dans laquelle le mécanisme à came (24) est formé intégralement avec le bouton rotatif (22).

3. Tondeuse selon l'une quelconque des revendications précédentes, dans laquelle chacune des deux surfaces étagées semi-circulaires (26) du mécanisme à came (24) comprend une pluralité d'étages individuels (26) d'étendue axiale différente.

4. Tondeuse selon la revendication 3, dans laquelle chacun des étages individuels (26) présente une aire (28) formée sur celui-ci qui forme une plateforme stable contre laquelle les surfaces d'engagement complémentaires de suiveur de came (36, 38) respectives peuvent reposer.

5. Tondeuse selon l'une quelconque des revendications précédentes, dans laquelle un ressort de rappel (56) est couplé entre le plateau de coupe (14) et le premier bras de levage (42), lequel ressort (56) pousse le plateau (14) dans sa position la plus haute éloignée de la surface à couper.

6. Tondeuse selon l'une quelconque des revendications précédentes, dans laquelle la tondeuse est une tondeuse robotisée.
